# EUROPÄISCHE PATENTSCHRIFT

(11) **EP 4 184 028 B1**
(45) Veröffentlichungstag und Bekanntmachung des Hinweises auf die Patenterteilung: **24.04.2024**
(21) Anmeldenummer: 22200696.7
(22) Anmeldetag: 11.10.2022
(51) Int. Cl.: F16F 1/36

(54) **LAGEREINRICHTUNG ZUM SCHWINGUNGSISOLIERENDEN LAGERN EINER MASCHINE**
BEARING DEVICE FOR VIBRATION-ISOLATING MOUNT OF A MACHINE
DISPOSITIF DE PALIER POUR LE SUPPORT ISOLANT DES VIBRATIONS D'UNE MACHINE

(30) Priorität: 18.11.2021 AT 11521 U
(43) Veröffentlichungstag der Anmeldung: 24.05.2023
(73) Patentinhaber: Getzner Werkstoffe Holding GmbH, 6706 Bürs (AT)
(72) Erfinder: Habrom, Ulrich, 71665 Vaihingen/Enz (DE)
(74) Vertreter: Torggler & Hofmann Patentanwälte - Rankweil

(56) Entgegenhaltungen:
- EP-A1- 1 679 445
- CN-B- 103 438 091
- DE-A1- 4 016 223
- DE-A1- 4 033 805
- US-A1- 2020 263 731

## Beschreibung

Die vorliegende Erfindung betrifft eine Lagereinrichtung zum schwingungsisolierenden Lagern einer Maschine, wobei die Lagereinrichtung ein Lagergehäuse und einen Innenkörper aufweist, wobei der Innenkörper bewegbar in einem Innenhohlraum des Lagergehäuses angeordnet und durch eine Durchführöffnung im Lagergehäuse hindurch mit einem außerhalb des Lagergehäuses angeordneten Auflager für die Maschine verbunden ist.

Gattungsgemäße Lagereinrichtungen dienen der Schwingungsisolierung, also der Verhinderung oder zumindest der Verringerung der Übertragung von Schwingungen von einem Körper auf einen anderen. Bei gattungsgemäßen Lagereinrichtungen geht es im Speziellen darum, eine Maschine durch die Lagereinrichtung gegen von außen eingetragene Schwingungen bzw. Vibrationen zu isolieren und/oder die von einer Maschine erzeugten Schwingungen bzw. Vibrationen nicht oder nur in verringertem Maße bzw. gedämpft auf die Umgebung zu übertragen.

Bei einer ersten gattungsgemäßen, durch offenkundige Vorbenutzung bekannt gewordenen Lagereinrichtung gemäß des Standes der Technik ist der Innenkörper fix über zwei ring- bzw. konusförmige Elastomerkörper mit dem Lagergehäuse verbunden. Hierdurch wird zwar eine Schwingungsisolierung in alle drei Raumrichtungen erreicht. Diese Lagereinrichtungen müssen aber jeweils gesondert für den jeweiligen Anwendungsfall und dessen Erfordernisse konfiguriert und dann hergestellt werden.

Bei einer zweiten in der DE 40 33 805 A1 gezeigten Lagereinrichtung sind mehrere Elastomerkörper zwischen dem Innenkörper und dem Lagergehäuse angeordnet, wobei diese zur Verbesserung einer Dämmwirkung durch Freiräume voneinander beabstandet eingelegt sind. Nachteile dieser Ausbildung sind, dass keine wirksame Lagesicherung der Einlegeteile gegeben ist und sich das korrekte Einlegen und Wechseln der Elastomerkörper als problematisch gestaltet.

Aufgabe der Erfindung ist es, eine gattungsgemäße Lagereinrichtung dahingehend zu verbessern, dass sie einerseits die Schwingungsisolierung in drei Raumrichtungen bewirkt, andererseits aber in einfacher Art und Weise in ihren schwingungsisolierenden Eigenschaften an den jeweiligen Anwendungsfall angepasst werden kann.

Hierzu sieht die Erfindung vor, dass der Innenkörper mehrere Trennwände aufweist, wobei zwischen den Trennwänden Zwischenräume ausgebildet und in den Zwischenräumen schwingungsisolierende Einlegeteile angeordnet sind und der Innenkörper mittels der Einlegeteile schwingungsisolierend am Lagergehäuse abgestützt ist.

Die Erfindung ermöglicht in einfacher Art und Weise eine Konfiguration bzw. Anpassung der Lagereinrichtung an die jeweiligen Erfordernisse bzw. Aufgabenstellungen, indem in die Zwischenräume zwischen den Trennwänden für die jeweiligen Anforderungen geeignete schwingungsisolierende Einlegeteile eingesetzt werden. Durch die Auswahl der jeweils in den Zwischenräumen anzuordnenden Einlegeteile kann die Lagereinrichtung eben jeweils entsprechend an die Aufgabenstellung in einfacher Art und Weise angepasst werden. Hierdurch ist eine auf die jeweilige Aufgabenstellung abgestimmte Schwingungsisolierung in drei Raumrichtungen möglich. Besonders bevorzugt ist in diesem Zusammenhang vorgesehen, dass die Einlegeteile auswechselbar im jeweiligen Zwischenraum angeordnet sind. Dies ermöglicht es, ein und dieselbe Lagereinrichtung durch entsprechenden Austausch der Einlegeteile an verschiedene Aufgabenstellungen anzupassen.

Es ist auch möglich, dem Kunden, welcher eine Maschine entsprechend schwingungsisolierend zu lagern hat, ein Set bestehend aus einem Lagergehäuse, einem Innenkörper und verschiedenen Einlegeteilen an die Hand zu geben, sodass er für die jeweils bei ihm zu lagernde Maschine und deren Anforderungen die geeigneten Einlegeteile aus dem Set auswählen, in den Zwischenräumen zwischen den Trennwänden anordnen und so die Lagereinrichtung für die jeweilige Aufgabenstellung optimal konfigurieren kann.

Auch wenn dies nicht zwingend notwendig ist, ist dabei günstigerweise vorgesehen, dass in jedem der zwischen den Trennwänden ausgebildeten Zwischenräume genau ein Einlegeteil angeordnet ist. Die Einlegeteile stehen günstigerweise jeweils über den Zwischenraum zwischen den Trennwänden, in dem sie angeordnet sind, über. Sie können so am Lagergehäuse abgestützt sein, ohne dass der Innenkörper bzw. seine Trennwände in direkten physischen Kontakt mit dem Lagergehäuse treten. Hierdurch kann eine direkte Übertragung von Schwingungen bzw. Vibrationen zwischen Innenkörper und Lagergehäuse vermieden werden.

Die Einlegeteile sind bevorzugt elastisch vorgespannt im jeweiligen Zwischenraum angeordnet. Hierdurch kann der Innenkörper im Innenhohlraum des Lagergehäuses spielfrei gestellt werden. Es sind aber auch Ausgestaltungsformen der Erfindung denkbar, bei denen die Einlegeteile nicht elastisch im jeweiligen Zwischenraum vorgespannt sind. Bevorzugt ist vorgesehen, dass die Einlegeteile in die jeweiligen Zwischenräume lediglich eingelegt sind. D.h. in anderen Worten, dass die Einlegeteile nicht am Innenkörper oder am Lagergehäuse durch Ankleben oder dergleichen fixiert werden. Dies ist im Sinne einer Austauschbarkeit der Einlegeteile besonders günstig, da es dann ausreicht, das Lagergehäuse zu öffnen, um die Einlegeteile einzulegen oder durch andere Einlegeteile zu ersetzen.

Bevorzugt sind die Einlegeteile der Innenkörper im Lagergehäuse eingesperrt bzw. gefangen. Sie können also erst dann aus dem Lagergehäuse entnommen werden, wenn das Lagergehäuse entsprechend geöffnet wird. Hierdurch ist eine abrisssichere Ausgestaltung der Lagereinrichtung möglich. Das Lagergehäuse könnte entsprechend auch als Käfig oder Lagerkäfig oder dergleichen bezeichnet werden.

In einer bevorzugten Ausgestaltungsform wird das Lagergehäuse aus einer glockenförmigen Struktur und einem Untergrund, auf dem diese glockenförmige Struktur befestigt wird, ausgebildet. Der Untergrund wird in diesem Fall sozusagen als eine Wand des Lagergehäuses genutzt. Es ist aber natürlich auch denkbar, dass das Lagergehäuse als ein in sich bis auf die Durchführöffnung geschlossenes Gehäuse ausgebildet ist, welches entsprechend zum Einbringen des Innenkörpers und der Einlegeteile geöffnet werden kann.

Grundsätzlich ist es denkbar, in alle Zwischenräume zwischen den Trennwänden des Innenkörpers Einlegeteile mit denselben schwingungsisolierenden Eigenschaften einzubringen, um so z.B. eine Lagereinrichtung zu erschaffen, deren schwingungsisolierende Eigenschaften in allen drei Raumrichtungen identisch sind. Es ist aber auch möglich, erfindungsgemäße Lagereinrichtungen speziell so zu konfigurieren, dass sie in verschiedenen Raumrichtungen verschiedene schwingungsisolierende Eigenschaften, Härten oder dergleichen haben. Dies kann an die jeweilige Aufgabenstellung angepasst werden. In diesem Sinne sehen bevorzugte Varianten der Erfindung vor, dass zumindest zwei der Einlegeteile voneinander verschiedene schwingungsisolierende Eigenschaften aufweisen.

Günstigerweise ist jedenfalls vorgesehen, dass der Innenkörper in allen Raumrichtungen mittels der Einlegeteile am Lagergehäuse schwingungsisolierend abgestützt ist. Bevorzugt ist, wie oben bereits angedeutet, auch vorgesehen, dass der Innenkörper in allen Raumrichtungen vom Lagergehäuse beabstandet ist. Dies gilt günstigerweise für alle möglichen Betriebsstellungen bzw. Betriebszustände die der Innenkörper im Lagergehäuse einnehmen kann.

Bevorzugte Varianten der Erfindung sehen vor, dass eine der Trennwände des Innenkörpers eine Haupttrennwand ist und die anderen der Trennwände des Innenkörpers Seitentrennwände sind, wobei alle Seitentrennwände orthogonal zur Haupttrennwand verlaufend angeordnet sind. Günstig ist dabei, wenn die Haupttrennwand und die Seitentrennwände jeweils in sich eben ausgebildet sind.

Bevorzugt ist vorgesehen, dass auf beiden Seiten der Haupttrennwand Seitentrennwände angeordnet sind. Dasselbe gilt günstigerweise für die Einlegeteile. Es ist also bevorzugt auch vorgesehen, dass auf beiden Seiten der Haupttrennwand Einlegeteile in den jeweiligen Zwischenräumen angeordnet bzw. anordenbar sind.

In bevorzugten Varianten ist vorgesehen, dass die Haupttrennwand und das Auflager für die Maschine parallel zueinander angeordnet sind. So kann z.B. die Haupttrennwand genutzt werden, um die vertikal auf die Lagereinrichtung bzw. das Auflager einwirkenden Kräfte abzustützen.

Bevorzugt ist jedenfalls vorgesehen, dass im Innenhohlraum des Lagergehäuses zusätzlich zum Innenkörper zumindest sechs schwingungsisolierende Einlegeteile angeordnet sind. Die Zahl der Einlegeteile und vorzugsweise entsprechend auch der Zwischenräume zwischen den Trennwänden kann je nach Aufgabenstellung variieren. Bevorzugte Varianten sehen vor, dass sechs, acht, zwölf oder sechzehn schwingungsisolierende Einlegeteile im Innenhohlraum des Lagergehäuses angeordnet sind. Bevorzugt weist der Innenkörper dann eben eine entsprechende Anzahl von Zwischenräumen, also eben z.B. sechs, acht, zwölf oder sechzehn Zwischenräume auf. In bevorzugten Varianten ist vorgesehen, dass in einer Draufsicht auf die Haupttrennwand gesehen, zwei, jeweils einen der Zwischenräume begrenzende Seitentrennwände einen Winkel von 45°, 60°, 90° oder 120° miteinander einschließen. In anderen Worten ist bevorzugt vorgesehen, dass in der genannten Draufsicht auf die Haupttrennwand gesehen, zwei jeweils zueinander benachbarte Seitentrennwände einen Winkel von 45°, 60°, 90° oder 120° miteinander einschließen.

Günstig ist es auch, wenn alle Trennwände des Innenkörpers mittels eines durch die Durchführöffnung im Lagergehäuse hindurchgeführten Schaftes mit dem außerhalb des Lagergehäuses angeordneten Auflager für die Maschine verbunden sind. Der Schaft könnte auch als Kernschaft bezeichnet werden. Der Schaft weist günstigerweise eine Längsachse auf, wobei die Längsachse des Schafts eine Flächennormale auf die Haupttrennwand sein kann. Bevorzugt kann aber auch vorgesehen sein, dass alle Seitentrennwände, von der Längsachse des Schafts ausgehend, radial nach außen gerichtet angeordnet sind.

Auch wenn grundsätzlich andere Ausgestaltungsformen denkbar sind, ist doch bevorzugt vorgesehen, dass die Haupttrennwand eine kreisförmige Außenkontur aufweist. Die Seitentrennwände können in bevorzugten Varianten jeweils eine zumindest bereichsweise kreisförmige oder eine jeweils zumindest bereichsweise ellipsenförmige Außenkontur aufweisen.

In bevorzugten Varianten ist vorgesehen, dass das Lagergehäuse, der Innenkörper, der Schaft und auch das Auflager für die Maschine aus für die jeweilige Anwendung als starr zu betrachtende Bauteile ausgeführt sind. Die schwingungsisolierenden Einlegeteile sind hingegen bevorzugt aus einem Material ausgeführt, welches zur Schwingungsisolierung und/oder aber auch zur Ausrichtung des Innenkörpers und damit auch des Auflagers relativ zum Lagergehäuse elastisch deformiert werden kann.

Das Lagergehäuse, der Innenkörper, der Schaft und/oder das Auflager können bevorzugt aus Metall, z.B. nach EN 10088-3 in der Ausgabe 2014-12, oder Metalllegierungen, also z.B. aus Edelstahl oder Aluminium oder einer Aluminiumlegierung, aber auch aus, vorzugsweise thermoplastischen, Kunststoffen wie z.B. POM (Polyoxymethylene) oder aus faserverstärkten, insbesondere kohlefaserverstärkten, Kunststoffen hergestellt sein.

Die Einlegeteile bestehen günstigerweise aus einem entsprechend für die jeweilige Aufgabenstellung geeigneten, schwingungsisolierenden aber auch tragfähigen Elastomer. Bevorzugte Varianten sehen vor, dass das Elastomer ein, vorzugsweise geschäumtes, Polyurethan ist. Es können aber auch andere Elastomere wie z.B. thermoplastische Elastomere oder auch Gummi eingesetzt werden, um entsprechende schwingungsisolierende Einlegeteile auszubilden.

Die Zugfestigkeit, gemäß EN 10088-3 in der Ausgabe 2014-12, des Materials aus dem das Lagergehäuse, der Innenkörper, der Schaft und/oder das Auflager ausgebildet werden, liegt günstigerweise im Bereich von 360 N/mm² bis 1000 N/mm².

Bei den Einlegeteilen handelt es sich güntigerweise um gemischtzellige oder geschlossenzellige Elastomere mit entsprechend kombinierten Feder- und Dämpfungseigenschaften. Der statische Einsatzbereich, gemäß EN ISO 844:2009-10, liegt günstigerweise im Bereich von 0,0005 N/mm² bis 12 N/mm². Der statische Einsatzbereich gibt dabei die für stationäre Belastungen definierte maximale Druckspannung an, für die ein Elastomer die elastischen Eigenschaften dauerhaft aufrechterhält.

Weitere Merkmale und Einzelheiten bevorzugter Ausgestaltungsformen der Erfindung werden exemplarisch in der nachfolgenden Figurenbeschreibung erläutert. Es zeigen:
- Fig. 1: eine Seitenansicht auf ein erfindungsgemäßes Ausführungsbeispiel einer Lagereinrichtung;
- Fig. 2: eine Draufsicht auf das Ausführungsbeispiel gemäß Fig. 1;
- Fig. 3: den Schnitt entlang der Schnittlinie A-A aus Fig. 1;
- Fig. 4: den Schnitt entlang der Schnittlinie B-B aus Fig. 4, allerdings vor der Montage des Lagergehäuses auf dem Untergrund;
- Fig. 5: den Schnitt entlang der Schnittlinie C-C aus Fig. 1;
- Fig. 6: die glockenförmige Struktur des hier zum Einsatz kommenden Lagergehäuses;
- Fig. 7: eine Seitenansicht hierzu;
- Fig. 8: den Schnitt entlang der Schnittlinie D-D aus Fig. 7;
- Fig. 9 bis 12: verschiedene Ansichten des bei diesem Ausführungsbeispiel gemäß der Fig. 1 bis 5 zum Einsatz kommenden Innenkörpers samt Schaft und Auflager und
- Fig. 13 bis 18: Beispiele für alternative Ausgestaltungsformen des Innenkörpers.

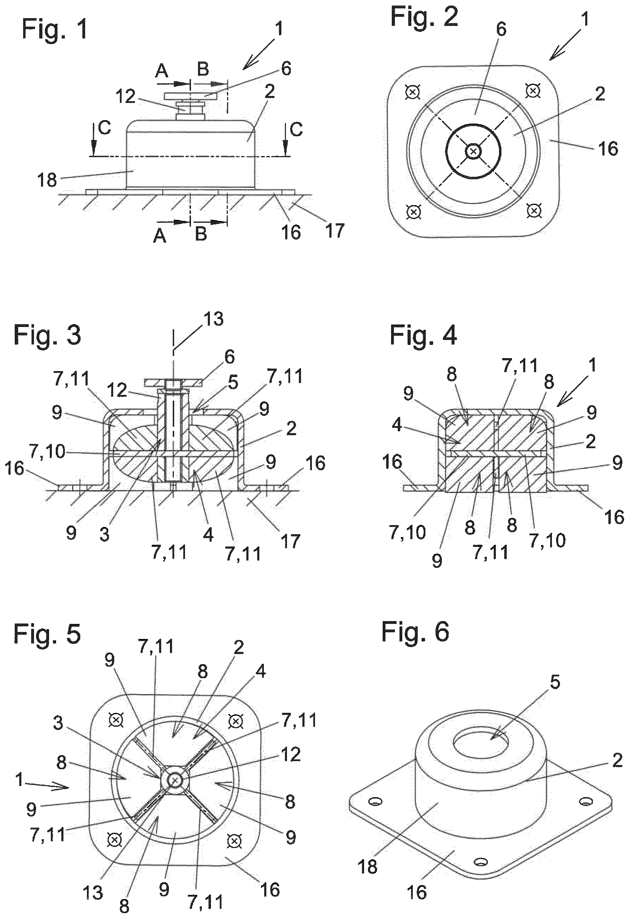

In Fig. 1 sieht man die erfindungsgemäße Lagereinrichtung 1 dieses Ausführungsbeispiels in einer Seitenansicht. Das Lagergehäuse 2 wird hier durch eine glockenförmige Struktur 18 gebildet, welcher mittels des Gehäuseflansches 16 auf einem Untergrund 17 fixiert ist, z.B. mittels Anschrauben, Anschweißen oder dergleichen. Die Oberfläche des Untergrunds 17 im Bereich der Lagereinrichtung 1 bildet in diesem Ausführungsbeispiel somit eine Außenwand des Lagergehäuses 2. Die restlichen Außenwände des Lagergehäuses 2 werden durch die glockenförmige Struktur 18 dieses Ausführungsbeispiels gebildet. Dies muss natürlich nicht so sein. Es kann sich beim Lagergehäuse 2 auch um ein Lagergehäuse handeln, welches selbst bzw. auch losgelöst vom Untergrund 17 eine entsprechende Anzahl von Außenwänden aufweist, um so, abgesehen von der Durchführöffnung 5, den Innenhohlraum 4 des Lagergehäuses 2 vollständig zu umschließen. Das Lagergehäuse 2 kann in sich geschlossene Wände aber auch Wände mit Öffnungen aufweisen, so lang dies nicht dazu führt, dass der Innenkörper 3 und/oder die Einlegeteile 9 aus dem Innenhohlraum 4 des Lagergehäuses 2 herausfallen können. Günstigerweise ist es jedenfalls so, dass, wie eingangs bereits erläutert, der Innenkörper 3 und die schwingungsisolierenden Einlegeteile 9 im Lagergehäuse 2 eingesperrt sind, wie es auch bei diesem Ausführungsbeispiel der Fall ist.

Durch die Durchführöffnung 5 im Lagergehäuse 2 hindurch ist der Innenkörper 3 mit dem außerhalb des Lagergehäuses 2 angeordneten Auflager 6 für die Maschine verbunden. Die Maschine selbst, welche durch die Lagereinrichtung 1 schwingungsisolierend gelagert werden soll, ist hier nicht dargestellt. Sie kann in an sich bekannter Weise auf dem Auflager 6 befestigt sein, bevorzugt aufliegen. Je nach Anordnung werden günstigerweise mehrere erfindungsgemäße Lagereinrichtungen 1 dazu verwendet, eine entsprechende Maschine zu lagern. Dies ist an sich bekannt und muss nicht weiter erläutert werden.

Fig. 2 zeigt eine Draufsicht auf die glockenförmige Struktur 18 des Lagergehäuses 2, dessen Gehäuseflansch 16 und das Auflager 6.

Fig. 3 zeigt einen Längsschnitt in einer Schnittebene die als Schnittlinie A-A in Fig. 1 eingezeichnet ist. Hier ist gut zu sehen, dass der Innenkörper 3 mehrere Trennwände 7 aufweist. Zwischen den Trennwänden 7 sind Zwischenräume 8 ausgebildet. In den Zwischenräumen 8 sind die schwingungsisolierenden Einlegeteile 9 angeordnet, wobei der Innenkörper 3 mittels der Einlegeteile 9 schwingungsisolierend am Lagergehäuse 2 abgestützt ist. Um die Einlegeteile 9 auswechselbar im jeweiligen Zwischenraum 8 anzuordnen, kann z.B., wie eingangs bereits erläutert, vorgesehen sein, dass die Einlegeteile 9 in die jeweiligen Zwischenräume 8 lediglich eingelegt sind. In Fig. 3 ist auch gut zu erkennen, dass die Trennwände 7 des Innenkörpers 3 günstigerweise in allen Raumrichtungen vom Lagergehäuse 2 beabstandet sind. Hierdurch wird verhindert, dass Schwingungen und Vibrationen über einen direkten Kontakt zwischen dem Innenkörper 3 und dem Lagergehäuse 2 übertragen werden können. In bevorzugten Ausgestaltungsformen, wie der hier realisierten, ist der Innenkörper 3 in allen Raumrichtungen mittels der schwingungsisolierenden Einlegeteile 9 am Lagergehäuse 2 schwingungsisolierend abgestützt. Die Einlegeteile 9 können alle dieselben schwingungsisolierenden Eigenschaften aber auch voneinander verschiedene schwingungsisolierende Eigenschaften aufweisen, je nachdem, wie die Lagereinrichtung 1 an den entsprechenden Anwendungsfall angepasst werden soll. Eine der Trennwände 7 des Innenkörpers 3 dieses Ausführungsbeispiels wird als Haupttrennwand 10 bezeichnet. Es handelt sich hier um die Trennwand 7, welche parallel zum Auflager 6 für die Maschine angeordnet ist. Zusätzlich weist der Innenkörper 3 dieses Ausführungsbeispiels aber auch Trennwände 7 auf, welche als Seitentrennwände 11 bezeichnet werden. Diese Seitentrennwände 11 sind orthogonal zur Haupttrennwand 10 verlaufend angeordnet. Zwischen den Trennwänden 7, also der Haupttrennwand 10 und den Seitentrennwänden 11 befinden sich die Zwischenräume 8, in denen die schwingungsisolierenden Einlegeteile 9 angeordnet sind. Günstigerweise befindet sich, wie hier auch realisiert, in jedem Zwischenraum 8 genau ein schwingungsisolierendes Einlegeteil 9.

Fig. 4 zeigt den Schnitt in einer Schnittebene entlang der Schnittlinie B-B aus Fig. 1, allerdings in einem Zustand, bei dem die glockenförmige Struktur 18 des Lagergehäuses 2 noch nicht auf dem Untergrund 17 befestigt ist. Es ist zu sehen, dass in diesem Zustand die hier zum Einsatz kommenden Einlegeteile 9 noch ein Stück weit über die Gehäuseflansche 16 überstehen bzw. aus der glockenartigen Struktur 18 hervorstehen. Wird nun die glockenförmige Struktur 18 mit dem Gehäuseflansch 16 am Untergrund 17 befestigt, so werden diese Einlegeteile 9 ein Stück weit in den Innenhohlraum 4 hineingedrückt und so elastisch vorgespannt. Hierdurch wird eine entsprechende Spielfreistellung des Innenkörpers 3 im Innenhohlraum 4 erreicht. Wie eingangs bereits erläutert, kann durch eine entsprechende Ausbildung der Einlegeteile 9 aber auch auf eine solche Vorspannung verzichtet werden, falls dies gewünscht ist.

Der Schaft 12 ist durch die Durchführöffnung 5 im Lagergehäuse 2 hindurchgeführt. Er verbindet alle Trennwände 7 des Innenkörpers 3 mit dem außerhalb des Lagergehäuses 2 angeordneten Auflager 6 für die Maschine. In bevorzugten Ausgestaltungsformen, wie der hier gezeigten, bildet die Längsachse 13 des Schaftes 12 eine Flächennormale auf die Haupttrennwand 10. Die Seitenwände 11 hingegen sind günstigerweise, wie hier auch realisiert, von der Längsachse 13 des Schafts 12 ausgehend, radial nach außen gerichtet angeordnet.

In Fig. 5, welche den Horizontalschnitt entlang der Schnittlinie C-C aus Fig. 1 zeigt, ist gut zu sehen, wie zwischen den Seitentrennwänden 11 die Zwischenräume 8 ausgebildet sind, in denen jeweils ein Einlegeteil 9 angeordnet ist. In diesem ersten Ausführungsbeispiel gemäß Fig. 5 weist der Innenkörper 3 der Lagereinrichtung 1 zwischen seinen Trennwänden 7 insgesamt 8 Zwischenräume auf, in denen jeweils ein Einlegeteil 9 eingelegt ist. Vier dieser Einlegeteile 9 bzw. Zwischenräume 8 befinden sich oberhalb der Haupttrennwand 10 bzw. auf der zum Auflager 6 hin weisenden Seite der Haupttrennwand 10. Die anderen vier Einlegeteile 9 und Zwischenräume 8 befinden sich auf der, dem Auflager 6 gegenüberliegenden, meist unteren Seite der Haupttrennwand 10. In Fig. 5 ist gut zu sehen, dass in dieser ersten Ausführungsform die jeweils einen der Zwischenräume begrenzenden Seitentrennwände 11 in einem 90°-Winkel relativ zueinander angeordnet sind.

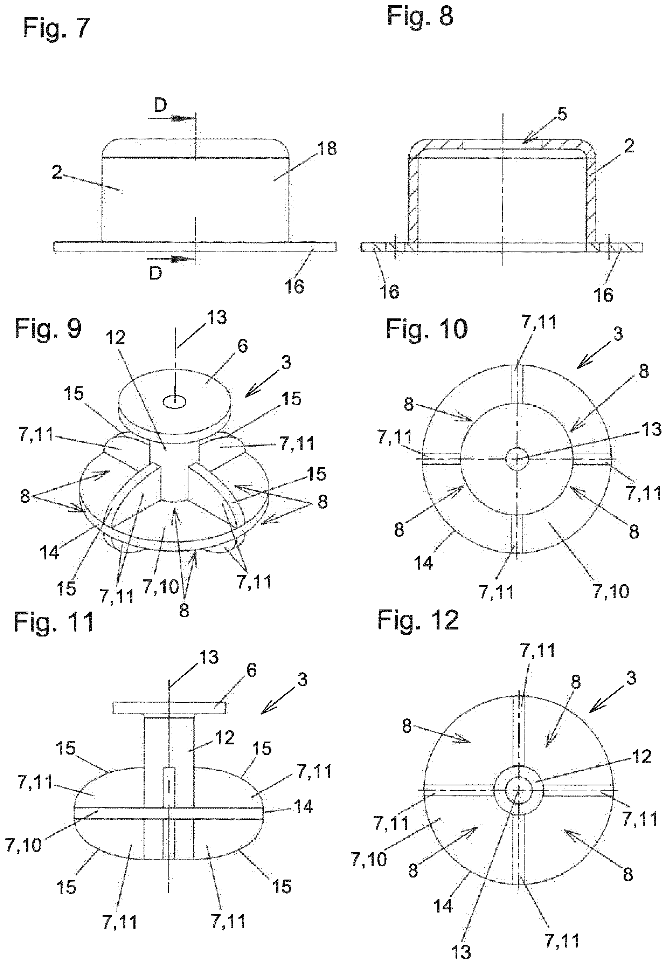

Fig. 6 zeigt die glockenförmige Struktur 18 des Lagergehäuses 2 mit dem Gehäuseflansch 16 und der Durchführöffnung 5 in einer perspektivischen Darstellung. Fig. 7 zeigt eine Seitenansicht hierauf und Fig. 8 den Schnitt entlang der Schnittlinie D-D.

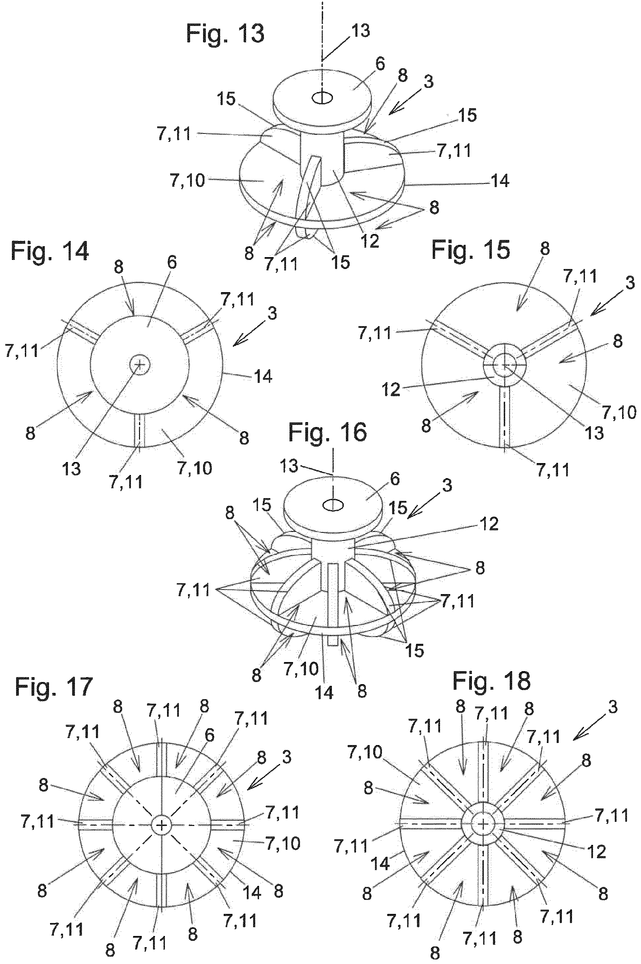

In den Fig. 9 bis 12 ist nun der hier in diesem Ausführungsbeispiel gemäß der Fig. 1 bis 8 verwendete Innenkörper 3 zusammen mit dem Schaft 12 und dem Auflager 6 losgelöst von den anderen Bauteilen der Lagereinrichtung 1 dargestellt. Fig. 9 zeigt eine perspektivische Ansicht, Fig. 10 eine Draufsicht, Fig. 11 eine Seitenansicht und Fig. 12 eine Ansicht von unten. Zusätzlich zu den bereits geschilderten Merkmalen dieser Ausgestaltungsform des Innenkörpers 3 ist hier auch gut zu sehen, dass die Haupttrennwand 10 in diesem Ausführungsbeispiel eine kreisförmige Außenkontur 14 aufweist, während die Seitentrennwände 11 in diesem Ausführungsbeispiel eine zumindest bereichsweise ellipsenförmige Außenkontur 15 aufweisen. Alternativ wäre es, wie eingangs bereits erläutert, aber z.B. auch möglich, dass auch die Seitentrennwände 11 eine bereichsweise kugelförmige Außenkontur 15 aufweisen. Natürlich sind darüber hinaus auch andere Ausgestaltungsformen des Innenkörpers 3 erfindungsgemäß möglich. Während in diesem ersten Ausführungsbeispiel eines Innenkörpers 3 oberhalb und unterhalb der Haupttrennwand 10 jeweils vier Zwischenräume 8 und entsprechend auch vier Einlegeteile 9 vorgesehen sind, zeigen die Fig. 13 bis 18 beispielhaft andere Möglichkeiten der Ausgestaltung.

Die Fig. 13 bis 15 zeigen eine perspektivische Ansicht, eine Draufsicht und eine Ansicht von unten auf ein Ausführungsbeispiel eines Innenkörpers 3, welcher insgesamt sechs Zwischenräume 8 für sechs Einlegeteile 9 aufweist. Hiervon sind drei Zwischenräume 8 oberhalb und drei unterhalb der Haupttrennwand 10 angeordnet. Jeweils zueinander benachbarte bzw. in andere Worten jeweils einen der Zwischenräume begrenzende Seitentrennwände 11 schließen hier einen 120° Winkel miteinander ein.

Fig. 16 zeigt eine alternative Ausgestaltungsform eines Innenkörpers 3, welcher oberhalb und unterhalb der Haupttrennwand 10 jeweils acht Zwischenräume 8 und damit insgesamt sechzehn Zwischenräume 8 aufweist. Entsprechend können hier in bevorzugten Ausführungsvarianten auch sechzehn Einlegeteile 9 zum Einsatz kommen. Die Winkel zwischen zwei jeweils zueinander benachbarten bzw. in anderen Worten gemeinsamen einen Zwischenraum 8 begrenzenden Seitentrennwänden 11 betragen hier 45°.

Wie durch die verschiedenen, in Fig. 9 bis 18 gezeigten Ausgestaltungsformen des Innenkörpers 3 angedeutet, können die Anzahl der Zwischenräume 8, die Anordnung der Trennwände 7 und auch die Anzahl der Einlegeteile 9 wie auch die elastischen bzw. schwingungsisolierenden Eigenschaften der Einlegeteile 9 an die jeweilige Aufgabenstellung angepasst werden. Es ist z.B. auch denkbar, die Trennwände 7 asymmetrisch anzuordnen, sodass entsprechend auch verschieden große Einlegeteile 9 zum Einsatz kommen können.

### Legende zu den Hinweisziffern:

- 1: Lagereinrichtung
- 2: Lagergehäuse
- 3: Innenkörper
- 4: Innenhohlraum
- 5: Durchführöffnung
- 6: Auflager
- 7: Trennwand
- 8: Zwischenraum
- 9: Einlegeteil
- 10: Haupttrennwand
- 11: Seitentrennwand
- 12: Schaft
- 13: Längsachse
- 14: Außenkontur
- 15: Außenkontur
- 16: Gehäuseflansch
- 17: Untergrund
- 18: glockenförmige Struktur

## Patentansprüche

1. Lagereinrichtung (1) zum schwingungsisolierenden Lagern einer Maschine, wobei die Lagereinrichtung (1) ein Lagergehäuse (2) und einen Innenkörper (3) aufweist, wobei der Innenkörper (3) bewegbar in einem Innenhohlraum (4) des Lagergehäuses (2) angeordnet und durch eine Durchführöffnung (5) im Lagergehäuse (2) hindurch mit einem außerhalb des Lagergehäuses (2) angeordneten Auflager (6) für die Maschine verbunden ist, wobei der Innenkörper (3) mehrere Trennwände (7) aufweist, wobei zwischen den Trennwänden (7) Zwischenräume (8) ausgebildet und in den Zwischenräumen (8) schwingungsisolierende Einlegeteile (9) angeordnet sind und der Innenkörper (3) mittels der Einlegeteile (9) schwingungsisolierend am Lagergehäuse (2) abgestützt ist.

2. Lagereinrichtung (1) nach Anspruch 1, **dadurch gekennzeichnet, dass** die Einlegeteile (9) elastisch vorgespannt im jeweiligen Zwischenraum (8) angeordnet sind.

3. Lagereinrichtung (1) nach Anspruch 1 oder 2, **dadurch gekennzeichnet, dass** die Einlegeteile (9) auswechselbar im jeweiligen Zwischenraum (8) angeordnet sind.

4. Lagereinrichtung (1) nach einem der Ansprüche 1 bis 3, **dadurch gekennzeichnet, dass** die Einlegeteile (9) in die jeweiligen Zwischenräume (8) lediglich eingelegt sind.

5. Lagereinrichtung (1) nach einem der Ansprüche 1 bis 4, **dadurch gekennzeichnet, dass** zumindest zwei der Einlegeteile (9) voneinander verschiedene schwingungsisolierende Eigenschaften aufweisen.

6. Lagereinrichtung (1) nach einem der Ansprüche 1 bis 5, **dadurch gekennzeichnet, dass** der Innenkörper (3) in allen Raumrichtungen mittels der Einlegeteile (9) am Lagergehäuse (2) schwingungsisolierend abgestützt ist und/oder dass der Innenkörper (3) in allen Raumrichtungen vom Lagergehäuse (2) beabstandet ist.

7. Lagereinrichtung (1) nach einem der Ansprüche 1 bis 6, **dadurch gekennzeichnet, dass** eine der Trennwände (7) des Innenkörpers (3) eine Haupttrennwand (10) ist und die anderen der Trennwände (7) des Innenkörpers (3) Seitentrennwände (11) sind, wobei alle Seitentrennwände (11) orthogonal zur Haupttrennwand (10) verlaufend angeordnet sind.

8. Lagereinrichtung (1) nach einem der Ansprüche 1 bis 7, **dadurch gekennzeichnet, dass** alle Trennwände (7) des Innenkörpers (3) mittels eines, durch die Durchführöffnung (5) im Lagergehäuse (2) hindurch geführten, Schaftes (12) mit dem außerhalb des Lagergehäuses (2) angeordneten Auflager (6) für die Maschine verbunden sind.

9. Lagereinrichtung (1) nach Anspruch 7 und 8, **dadurch gekennzeichnet, dass** der Schaft (12) eine Längsachse aufweist, wobei die Längsachse (13) des Schafts (12) eine Flächennormale auf die Haupttrennwand (10) ist und/oder wobei alle Seitentrennwände (11), von der Längsachse (13) des Schafts (12) ausgehend, radial nach außen gerichtet angeordnet sind.

10. Lagereinrichtung (1) nach einem der Ansprüche 7 bis 9, **dadurch gekennzeichnet, dass** die Haupttrennwand (10) eine kreisförmige Außenkontur (14) aufweist und/oder dass die Seitentrennwände (11) jeweils eine zumindest bereichsweise kreisförmige oder jeweils eine zumindest bereichsweise ellipsenförmige Außenkontur (15) aufweisen.

## Claims

1. Bearing device (1) for bearing a machine in a vibration-isolating manner, wherein the bearing device (1) has a bearing housing (2) and an internal body (3), wherein the internal body (3) is arranged movably in an internal cavity (4) of the bearing housing (2) and is connected to a support (6) for the machine, which support is arranged outside the bearing housing (2), through a feed-through opening (5) in the bearing housing (2), wherein the internal body (3) has a plurality of partitions (7), wherein gaps (8) are formed between the partitions (7) and vibration-isolating inserts (9) are arranged in the gaps (8), and the internal body (3) is supported on the bearing housing (2) by means of the inserts (9) in a manner isolated from vibrations.

2. Bearing device (1) according to claim 1, **characterised in that** the inserts (9) are arranged in the particular gap (8) in a resiliently preloaded manner.

3. Bearing device (1) according to claim 1 or claim 2, **characterised in that** the inserts (9) are arranged in the particular gap (8) in an interchangeable manner.

4. Bearing device (1) according to any of claims 1 to 3, **characterised in that** the inserts (9) are merely inserted into the particular gaps (8).

5. Bearing device (1) according to any of claims 1 to 4, **characterised in that** at least two of the inserts (9) have different vibration-isolating properties from one another.

6. Bearing device (1) according to any of claims 1 to 5, **characterised in that** the internal body (3) is supported on the bearing housing (2) by means of the inserts (9) in a manner isolated from vibrations in all spatial directions, and/or **in that** the internal body (3) is arranged at a distance from the bearing housing (2) in all spatial directions.

7. Bearing device (1) according to any of claims 1 to 6, **characterised in that** one of the partitions (7) of the internal body (3) is a main partition (10) and the other partitions (7) of the internal body (3) are side partitions (11), all the side partitions (11) being arranged so as to extend orthogonally to the main partition (10).

8. Bearing device (1) according to any of claims 1 to 7, **characterised in that** all the partition (7) of the internal body (3) are connected to the support (6) for the machine arranged outside the bearing housing (2) by means of a shaft (12) guided through the feed-through opening (5) in the bearing housing (2).

9. Bearing device (1) according to claim 7 or claim 8, **characterised in that** the shaft (12) has a longitudinal axis, the longitudinal axis (13) of the shaft (12) being a surface normal to the main partition (10) and/or all the side partitions (11) being arranged so as to be directed radially outwards starting from the longitudinal axis (13) of the shaft (12).

10. Bearing device (1) according to any of claims 7 to 9, **characterised in that** the main partition (10) has a circular outer contour (14), and/or **in that** the side partitions (11) each have an outer contour (15) that is circular at least in some regions or elliptical at least in some regions

## Revendications

1. Dispositif de palier (1) pour le montage isolant des vibrations d'une machine, le dispositif de palier (1) étant muni d'un boîtier de palier (2) et d'un corps intérieur (3), le corps intérieur (3) étant disposé mobile dans une cavité intérieure (4) du boîtier de palier (2) et étant relié, via une ouverture de passage (5) dans le boîtier de palier (2), à un support (6) pour la machine disposé à l'extérieur du boîtier de palier (2), le corps intérieur (3) étant muni de plusieurs parois de séparation (7), des espaces intermédiaires (8) étant formés entre les parois de séparation (7) et des pièces d'insertion (9) isolant des vibrations étant disposées dans les espaces intermédiaires (8), et le corps intérieur (3) étant en appui contre le boîtier de palier (2) au moyen des pièces d'insertion (9) en étant isolé des vibrations.

2. Dispositif de palier (1) selon la revendication 1, **caractérisé en ce que** les pièces d'insertion (9) sont disposées de manière précontrainte élastiquement dans l'espace intermédiaire respectif (8).

3. Dispositif de palier (1) selon la revendication 1 ou 2, **caractérisé en ce que** les pièces d'insertion (9) sont disposées de manière interchangeable dans l'espace intermédiaire respectif (8).

4. Dispositif de palier (1) selon l'une des revendications 1 à 3, **caractérisé en ce que** les pièces d'insertion (9) sont simplement insérées dans les espaces intermédiaires (8) respectifs.

5. Dispositif de support (1) selon l'une des revendications 1 à 4, **caractérisé en ce qu'**au moins deux des pièces d'insertion (9) présentent des propriétés d'isolation contre les vibrations différentes l'une de l'autre.

6. Dispositif de palier (1) selon l'une des revendications 1 à 5, **caractérisé en ce que** le corps intérieur (3) est en appui dans toutes les directions de l'espace au moyen des pièces d'insertion (9) contre le boîtier de palier (2) en étant isolé des vibrations, et/ou **en ce que** le corps intérieur (3) est espacé du boîtier de palier (2) dans toutes les directions de l'espace.

7. Dispositif de palier (1) selon l'une des revendications 1 à 6, **caractérisé en ce que** l'une des parois de séparation (7) du corps intérieur (3) est une paroi de séparation principale (10) et les autres des parois de séparation (7) du corps intérieur (3) sont des parois de séparation latérales (11), toutes les parois de séparation latérales (11) étant disposées orthogonalement à la paroi de séparation principale (10).

8. Dispositif de palier (1) selon l'une des revendications 1 à 7, **caractérisé en ce que** toutes les parois de séparation (7) du corps intérieur (3) sont reliées au support (6) pour la machine, disposé à l'extérieur du corps de palier (2), au moyen d'une tige (12) traversant l'ouverture de passage (5) dans le corps de palier (2).

9. Dispositif de palier (1) selon les revendications 7 et 8, **caractérisé en ce que** la tige (12) présente un axe longitudinal, l'axe longitudinal (13) de la tige (12) étant une normale à la surface de la paroi de séparation principale (10), et/ou toutes les parois de séparation latérales (11) sont disposées radialement vers l'extérieur en partant de l'axe longitudinal (13) de la tige (12).

10. Dispositif de palier (1) selon l'une des revendications 7 à 9, **caractérisé en ce que** la paroi de séparation principale (10) présente un contour extérieur circulaire (14), et/ou **en ce que** les parois de séparation latérales (11) présentent chacune un contour extérieur (15) au moins partiellement circulaire ou au moins partiellement elliptique.
